# EUROPEAN PATENT APPLICATION

(11) **EP 0 680 858 A1**
(43) Date of publication of application: **08.11.1995**
(21) Application number: 95303100.2
(22) Date of filing: 05.05.1995
(51) Int. Cl.: B60R 25/00

(54) **Security device**

(30) Priority: 07.05.1994 GB 9409102; 22.06.1994 GB 9412543
(71) Applicant: Monks, Thomas Leo, Leyland, Lancashire PR5 3SP (GB)
(72) Inventor: Monks, Thomas Leo, Leyland, Lancashire PR5 3SP (GB)
(74) Representative: Brierley, Anthony Paul

(57) **Abstract**

A security device 50 for securing a brake cable of, for example, a caravan comprises a cylindrical housing 52 in which a block 56 is slidably received. The block includes a square cross-section opening 62 which is arranged to slidably receive a threaded shaft 32 which is movable under the control of an electric motor 70. A brake cable 6 is secured by means of collars 58, 60 relative to the block. When arranged as shown in Figure 4, the brake cable 6 can be operated in a normal manner. To secure the brake cable in position, the brakes are applied, whereupon the block 56 is moved to abut end face 80 of the housing. When so disposed, the electric motor 70 is used to urge shaft 32 into opening 62, so that it abuts face 26. In this position, the block 56 (and, furthermore, the brake cable secured thereto) is immovable and, therefore, the brakes cannot be released. A key or a key pad may be provided for activating and deactivating the device.

## Description

This invention relates to a security device and particularly, although not exclusively, relates to a security device for restricting the movement of a cable, for example, a brake cable of a vehicle, such as a caravan.

Many different types of security devices have been proposed for protecting vehicles against unauthorised removal. Many such devices include key-operated locking arrangements arranged to disable a part of the vehicle. For example, key-operated locks are known for locking the handbrake of a caravan when it is uncoupled from a towing vehicle. However, it is often possible for an unauthorised person to force such locks, remove the security device, couple the caravan to a towing vehicle and then steal it.

It is an object of the present invention to provide a security device which may alleviate problems associated with known devices.

According to the invention, there is provided a security device for restricting the movement of a cable, the device comprising a first member arranged to be fixed in position relative to the cable and a second member arranged to co-operate with the first member for selectively restricting movement of the first member, operation means being provided for moving the second member relative to the first member in order to selectively restrict movement of said first member.

The device is suitably arranged for restricting the movement of a brake cable of a vehicle. Preferably, the device is arranged to restrict unauthorised release of a brake of the vehicle. The vehicle may be, for example, a car, lorry, caravan, trailer or motorcycle.

Said first member is preferably arranged to be fixed to the cable. Preferably, said first member includes cable receiving means in which the cable may be received. Said cable receiving means is preferably arranged so that a cable received therein extends in a first direction. Said cable receiving means may comprise a bore arranged to receive the cable. Securement means is preferably provided for securing the first member relative to the cable. A securement element of said securement means may be arranged within the first member. For example, the securement element may be recessed therewithin.

Said first member is preferably movable. Preferably, said first member is movable in said first direction. Thus, preferably, when a cable is present within said cable receiving means, said cable extends in said first direction and said first member is also movable in said first direction. Said first member is preferably arranged to slide on a surface.

Said first member is preferably arranged to slide on a surface of a housing of the device. Preferably, the housing is hollow and includes a housing wall over which the first member is arranged to slide. Preferably, the housing includes an opening which extends in said first direction and said first member is arranged to slide within the opening. Preferably, the cross-sectional shape of the first member corresponds, at least in part, to the cross-sectional shape of the opening.

Said first member is preferably arranged to slide to a position in which it abuts an end wall portion of the housing. Said end wall portion preferably extends transversely to said first direction.

Said second member is preferably movable. Preferably, said second member is movable in said first direction. Said second member is preferably arranged to slide on a surface.

Preferably, said first and second members are arranged to co-operate by means of a projection on one of the members being received in an opening in the other member. Said opening may be in the form of a slot or hole. Preferably, said first member includes said opening and said second member includes said projection. Additionally and/or alternatively, said first and second members may be arranged to co-operate by abutment of respective faces of the first and second members. Said respective faces preferably face said first direction.

Said first and second members are preferably arranged to move translationally relative to one another. Said first and second members are preferably rotationally fixed relative to one another. Where the first and second members co-operate by means of a projection being received in an opening, said projection and opening preferably have non-circular cross-sections for preventing relative rotational movement of the members.

Preferably, said operation means includes an electric motor. Power supply means is suitably provided for said electric motor. Said power supply means is preferably an integral component of the device. Gear means is preferably coupled to said electric motor. Torque conversion means is preferably coupled to said electric motor.

Said operation means is preferably arranged to cause said second member to move towards and away from said first member. In this respect, said second member preferably includes a screw-threaded region, and more preferably, includes an internally screw-threaded region. Said screw-threaded region preferably co-operates with a rotatable screw-threaded member. The elongate axes of said screw-threaded regions of said second member and said rotatable screw-threaded member preferably extend in said first direction. Said rotatable screw-threaded member is preferably arranged to be rotated by said electric motor, when provided.

The invention extends to an assembly comprising a cable in combination with the device of the invention.

The invention further extends to a method of restricting unauthorised removal of a vehicle, the method using a device or an assembly according to the invention.

The method preferably comprises fixing the device to the vehicle in order to provide a means for selectively restricting movement of a brake cable of the vehicle. In a preferred embodiment, the vehicle is a towable vehicle, for example a caravan, trailer or the like.

Specific embodiments of the invention will now be described, by way of example, with reference to the accompanying diagrammatic drawings, in which:
Figure 1 is a side elevation, partly in cross-section, of a security device fitted to a brake cable, with the security device in a de-activated condition;
Figure 2 is a side elevation, partly in cross-section, of the security device of Figure 1 in an activated condition; and
Figure 3 is a cross-section along line A-A of Figures 1 and 2.
Figure 4 is a side elevation, partly in cross-section, of an alternative security device fitted to a brake cable, with the security device in a de-activated condition;
Figure 5 is a side elevation, partly in cross-section, of the security device of Figure 4 in an activated condition; and
Figure 6 is a cross-section along line B-B of Figure 5.

In the figure the same or similar parts are annotated with the same reference numerals.

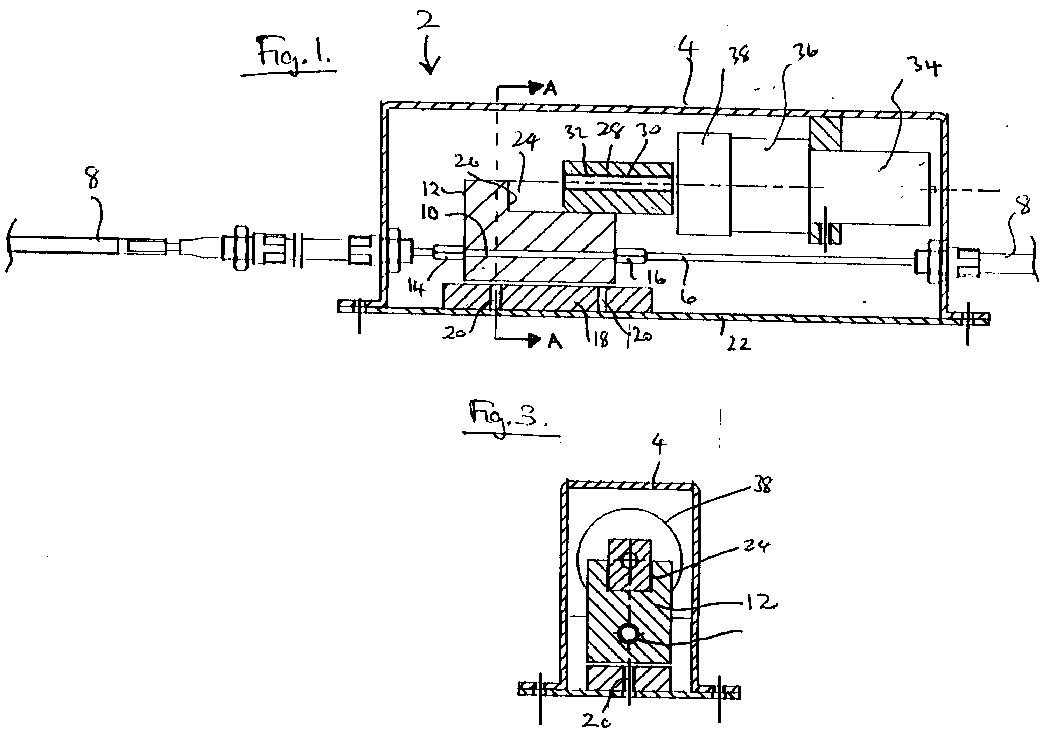

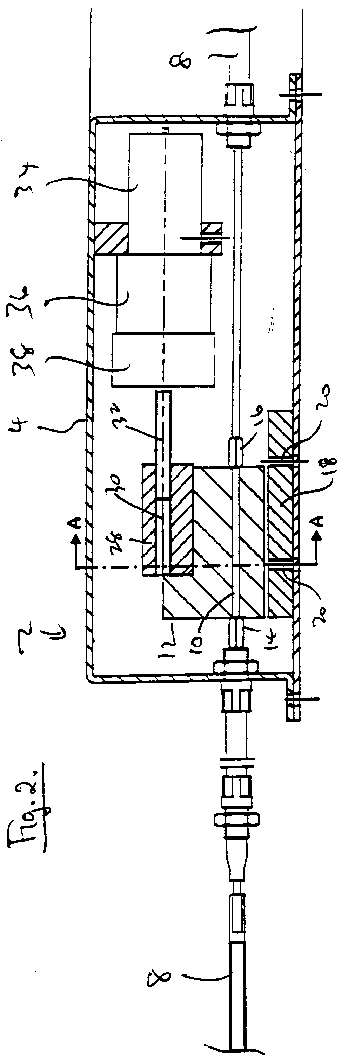

Referring to Figure 1, the security device 2 comprises a housing 4 through which a brake cable 6 extends. Outside the housing, the cable 6 is arranged within a protective sheaf 8. The free end of the cable disposed on the lefthand side (as seen in Figures 1 and 2) of the housing is fixed to a handbrake of a vehicle, for example a caravan. The free end of the cable disposed on the righthand side (as seen in Figures 1 and 2) of the housing is fixed to a brake of the vehicle.

A portion of the cable 6 disposed within the housing 4, extends through a bore 10 defined in a block 12. The block 12 is fixed in position relative to the cable 6 by means of spaced apart securement collars 14, 16 which are securely fixed to the cable.

The block 12 is seated on a plate 18 which is secured, via bolt holes 20, to lower wall 22 of the housing. The block 12 and plate 18 are arranged such that the block is able to slide on the plate.

A longitudinally extending, square cross-section, upwardly open slot 24 is defined in an upper portion of the block 12. The slot 24 extends from an abutment face 26 to the rear of the block. A square cross-section elongate pin 28 is arranged to co-operate with the slot 24 and be slidable therewithin. The pin 28 includes an internally screw-threaded bore 30 which co-operates with a threaded shaft 32. The shaft 32 is arranged to be rotated by an electric motor 34. The motor 34 is coupled to the shaft 32 via a gear box 36 and torque convertor 38. A battery (not shown) is suitably arranged within the housing for powering the motor. A user-operable keypad (not shown) is operatively connected to the device 2 and is arranged to actuate the motor 34.

The device 2 is secured in position suitably with the lower wall 22 being secured to the axle of a vehicle. The keypad is secured in position so that it can readily be user-operated.

Operation of the device 2 will now be described.

In Figure 1, the device is in a deactivated condition with the pin 28 having been retracted, by motor 34, away from abutment face 26 of the block 12. When so disposed, the handbrake of the vehicle may be applied in the normal manner. This causes brake cable 6 to move leftwardly (as seen in the figures) to apply the brake. Since block 12 is fixed in position on the cable 6 by means of collars 14, 16, the block 12 moves leftwardly into the position shown in Figure 2. The operator then activates the motor 34, by inputting the appropriate code via the keypad. The motor 34 causes shaft 32 to rotate and pin 28 is screwed outwardly on the shaft until it contacts abutment face 26 of the block, as shown in Figure 2. The torque convertor 38 is arranged to cause the motor to stop automatically when pin 28 contacts face 26.

It should be appreciated that when arranged as shown in Figure 2, the brakes of the vehicle cannot be released, since the block 28/brake cable 8 arrangement cannot move rightwardly due to the contact of pin 28 with abutment face 26.

In order to release the brakes, the operator must first input the appropriate code via the keypad, in which case motor 34 reverses and pin 28 is retracted to the position shown in Figure 1. The handbrake may then be released in the normal manner.

It should be noted that if a person should try to immobilise the device 2 by cutting the brake cable 8 at a position before it enters the device 2 then the brake of the vehicle will not be released since collar 14 prevents the cable from moving rightwardly. If the person should cut the cable 8 in a position between the device 2 and the brake, then the brake will be rendered ineffective; however, the person may then have difficulty in driving or towing the vehicle away in view of the inoperability of its brake.

The device 2 may be made in any size depending upon the vehicle or other item to be protected.

As an alternative to the user-operable keypad described above, the device 2 may include an integral radio frequency receiver which is arranged to activate the motor 74 in response to a signal from a user-operated radio frequency transmitter. The provision of such a receiver and transmitter may make it easier to install the device in relation to a vehicle, since no external wiring of the device is required.

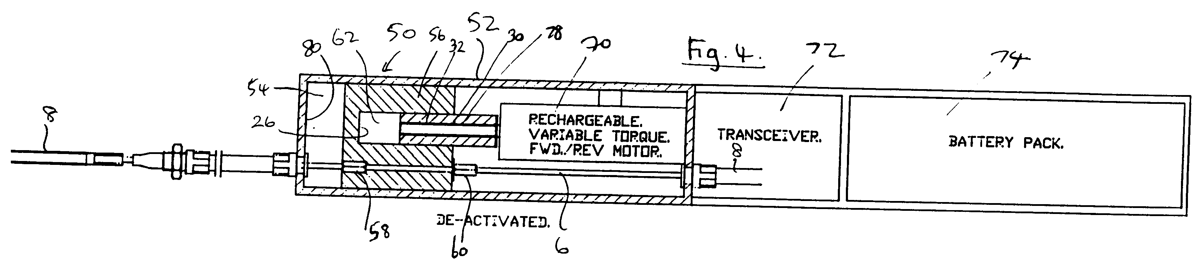

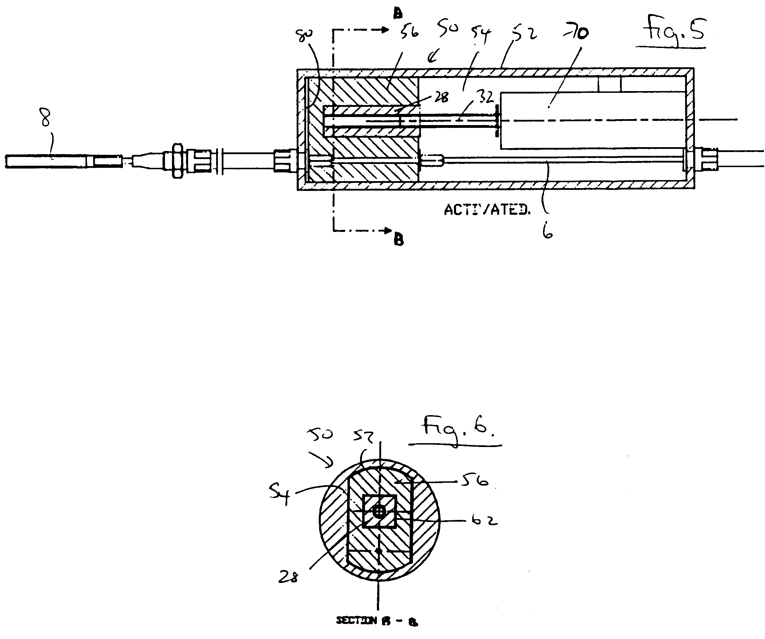

The embodiment of Figures 4 to 6 is generally similar to the above described embodiment, but is more compact. Referring to Figures 4 to 6, the device 50 includes a cylindrical housing 52 having an elongate passage 54 which slidably receives a block 56 which is of corresponding shape to the passage.

Cable 6 extends through a bore in the block 56 and is fixed in position relative thereto by means of securement collars 58, 60. Collar 60 is identical to collar 16 of the Figures 1 to 3 embodiment, whereas collar 58 is recessed within the block 56 so that it does not extend beyond the outer face of the block.

The block 56 includes a longitudinally extending square cross-section opening 62 within which square cross-section elongate pin 28 is slidable. The pin 28 is arranged as in the other embodiment.

A variable torque electric motor 70 which is capable of forward or reverse rotation is fixed within the housing 52 and is arranged to rotate shaft 32. An optional transceiver 72 and rechargeable battery pack 74 for powering the motor and/or transceiver may be housed within an extension of the housing 52, as shown in Figure 4.

The device 50 operates in a similar manner to that of device 2. When the device 50 is arranged as shown in Figure 4, the brake cable 6 of the vehicle may be operated in the normal manner. When the motor 90 is activated in the forward direction, the pin 28 is screwed outwardly on the shaft 32 so that it contacts abutment face 26 of the block 56. After contact with the abutment face 26, the pin 28 is still screwed outwardly so that block 56 slides within the housing 52 until it abuts end face 80 thereof. The motor stops automatically when this condition is reached. When so disposed, the brakes of the vehicle cannot be released since the block 56/brake cable 8 arrangement cannot move rightwardly.

To release the brakes, pin 28 is retracted and subsequent release of the brakes causes the block 56 to slide rightwardly within the housing so the device 50 returns to the condition shown in Figure 4.

The device 50 may conveniently be mounted over or within an axle of a vehicle. The device may be remotely operated by use of the transceiver 72.

In a modification of the Figures 4 to 6 embodiment, the motor, transceiver and battery pack may be dispensed with and a manual means, for example a type of key, may be provided for causing shaft 32 to rotate.

The devices 2, 50 may be used to protect, for example, caravans, trailers, horse boxes or motorcycles. In this latter case, the devices may be arranged within a tubular frame member of the motorcycle.

It should now be appreciated that devices 2, 50 may provide a relatively simple means of securing a vehicle against unauthorised removal.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A security device for restricting the movement of a cable, for example the brake cable of a vehicle, the device comprising a first member arranged to be fixed in position relative to the cable and a second member arranged to co-operate with the first member for selectively restricting movement of the first member, operation means being provided for moving the second member relative to the first member in order to selectively restrict movement of said first member.

2. A device according to Claim 1, wherein said first member includes cable receiving means in which the cable may be received so that the cable can extend in a first direction.

3. A device according to Claim 2, wherein said first member is arranged to slide in a first direction within an opening in a housing of the device.

4. A device according to Claim 2 or Claim 3, wherein said second member is movable in said first direction and said first and second members are arranged to co-operate by means of a projection on one of the members being received in an opening in the other member.

5. A device according to Claim 4, wherein said projection and said opening are non-circular in cross-section.

6. A device according to any preceding claim, wherein said first and second members are arranged to move translationally relative to one another.

7. A device according to any preceding claim, wherein said operation means includes an electric motor.

8. An assembly comprising a cable in combination with a device according to any of Claims 1 to 7.

9. A method of restricting unauthorised removal of a vehicle, the method using a device or an assembly according to any of Claims 1 to 8.

10. A method according to Claim 9, wherein said vehicle is a towable vehicle and the method comprises the step of fixing the device to the vehicle in order to provide a means for selectively restricting movement of a brake cable of the vehicle.
